# EUROPÄISCHE PATENTSCHRIFT

(11) **EP 0 578 799 B1**
(45) Veröffentlichungstag und Bekanntmachung des Hinweises auf die Patenterteilung: **07.06.1995**
(21) Anmeldenummer: 93902177.0
(22) Anmeldetag: 13.01.1993
(51) Int. Cl.: E04F 13/08, F16B 13/10, F16B 19/10

(54) **BEFESTIGUNGSELEMENT, INSBESONDERE ZUR BEFESTIGUNG VON FASSADENPLATTEN**
SECURING COMPONENT, ESPECIALLY FOR SECURING FACADE PLATES
ELEMENT DE FIXATION, EN PARTICULIER POUR LA FIXATION DE PANNEAUX DE FACADE

(30) Priorität: 31.01.1992 DE 4202774
(43) Veröffentlichungstag der Anmeldung: 19.01.1994
(73) Patentinhaber: fischerwerke Artur Fischer GmbH & Co. KG, D-72178 Waldachtal (DE)
(72) Erfinder: LIND, Stefan, D-7244 Tumlingen/Waldachtal 3 (DE)
(86) Internationale Anmeldenummer: EP9300052
(87) Internationale Veröffentlichungsnummer: WO9315288

(56) Entgegenhaltungen:
- EP-A- 0 328 314
- CH-A- 471 963
- DE-A- 1 450 992
- DE-A- 2 914 074
- DE-A- 4 011 229
- DE-U- 8 908 858
- FR-A- 2 594 501

## Beschreibung

Die Erfindung betrifft ein Befestigungselement aus Metall gemäß der Gattung des Anspruches 1 (siehe z.B. DE-U-8 908 858).

Zur Befestigung von eine geringe Plattenstärke aufweisenden Fassadenplatten werden Bohrlöcher mit Hinterschneidung an der Rückseite der Fassadenplatte angebracht, die eine sehr geringe Bohrlochtiefe aufweisen. Herkömmliche Befestigungselemente mit Spreizhülsen sind für diesen Einsatzbereich wenig geeignet, da die Spreizhülse zu Ihrer Verankerung auf ein auf dem Bohrlochgrund aufsitzendes Spreizelement mit Hammerschlägen aufgetrieben wird. Durch die Hammerschläge könnte die Fassadenplatte brechen oder die Bohrung durchgestanzt werden.

Aus der DE 40 11 229 A1 ist ein Befestigungselement bekannt, bei dem diese Nachteile vermieden sind. Anstelle einer Spreizhülse wird bei diesem Befestigungselement ein dachförmig abgebogener metallischer Ring verwendet, dessen abgebogene Enden auf der konischen Mantelfläche eines am Bohrlochgrund aufsitzenden Spreizkonusses aufliegen. Mit einem Setzwerkzeug kann durch leichten Druck der Ring flachgedrückt und in die Hinterschneidung des Bohrloches eingebogen werden. Um das Durchstanzen der Bohrung bei dünnen Fassadenplatten zu vermeiden, ist eine exakte Dosierung der Druckkraft erforderlich. Eine solche Vorrichtung ist daher aufwendig und üblicherweise stationär aufgestellt. Die Fassadenplatten werden an dieser Stelle mit den Befestigungselementen ausgerüstet und an die Verlegestelle transportiert. Aufgrund der die Rückseite der Fassadenplatten überragenden Befestigungsbolzen ist ein Stapeln der Platten für den Transport nicht möglich. Dadurch wird der Arbeitsablauf beim Verlegen der Platten und bei längeren Transportwegen beeinträchtigt.

Der Erfindung liegt daher die Aufgabe zugrunde, ein Befestigungselement, insbesondere zur Befestigung von Fassadenplatten, zu schaffen, das ohne aufwendige Setzvorrichtung einfach und sicher auch in sehr dünnen Fassadenplatten montierbar ist.

Die Lösung dieser Aufgabe wird mit den im Anspruch 1 aufgeführten Merkmalen erreicht. Zur Verankerung wird das Befestigungselement in ein vorbereitetes Bohrloch der Fassadenplatte soweit eingeschoben, bis die Stirnseite der Spreizhülse auf dem Bohrlochgrund aufsitzt. Danach wird der Blindniet mit seinem Setzkopf voraus durch eine Bohrung des auf die Rückseite der Fassadenplatte zu befestigenden Gegenstandes und durch die Innenbohrung der Spreizhülse soweit eingeschoben, bis der Nietkopf an der Außenfläche des zu befestigenden Gegenstandes anliegt. Mit einer Nietzange wird über den Nietdorn der Setzkopf des Blindniets in den geschlitzten Teil der Innenbohrung der Spreizhülse eingezogen und vernietet. Durch die Stauchung und Ausbildung des Setzkopfes werden die Spreizsegmente aufgeweitet und der auf der Außenfläche angeordnete Wulst in die Hinterschneidung des Bohrloches gedrückt. Gleichzeitig wird der zu befestigende Gegenstand durch den Nietkopf gegen die Rückseite der Fassadenplatte verspannt. Bei dem Gegenstand kann es sich um einen Haken, Befestigungswinkel oder dgl. handeln, mit dem die Fassadenplatte an einer Unterkonstruktion angehängt oder verschraubt werden kann. Damit wird eine unsichtbare Fassadenbefestigung erreicht, die hohen Druck- und Sogkräften standhält. Durch den plastisch verformten Setzkopf der Blindniet werden die Spreizsegmente abgestützt, so daß sich eine formschlüssige Verbindung mit der Fassadenplatte ergibt.

Um einen ausreichenden Spreizdruck für die Aufweitung der Spreizsegmente zu erreichen, ist es zweckmäßig, daß die Innenbohrung der Spreizhülse im ungeschlitzten Teil einen zylindrischen Abschnitt und daran anschließend eine kegelstumpfartige Erweiterung aufweist, die sich wieder zum vorderen Ende der Spreizhülse hin auf den Durchmesser des zylindrischen Abschnittes verjüngt.

Das Einziehen des Setzkopfes der Blindniet wird dadurch erleichtert, daß die Innenbohrung am vorderen Ende der Spreizhülse mit einer Senkung versehen ist.

Schließlich kann zur Verbesserung der Verteilung der Spreizkraft der Wulst entweder ein sägezahnförmiges Profil mit zum hinteren Ende der Spreizhülse geneigten Schrägfläche oder ein trapezförmiges Profil aufweisen.

Die Erfindung ist nachfolgend anhand in der Zeichnung dargestellter Ausführungsbeispiele näher erläutert.

Es zeigen:
- Figur 1: ein in einer Fassadenplatte eingesetztes Befestigungselement,
- Figur 2: das Befestigungselement nach Figur 1 in verspreiztem Zustand und
- Figur 3: ein weiteres Ausführungsbeispiel der Spreizhülse des Befestigungselementes.

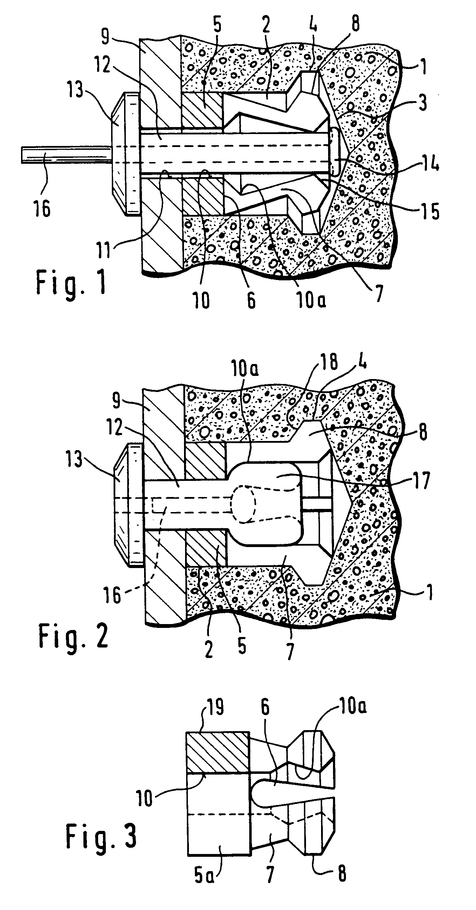

In Figur 1 ist eine Fassadenplatte 1 mit einem Bohrloch 2 ersichtlich, welches im Bereich des Bohrlochgrundes 3 eine Hinterschneidung 4 aufweist. Die Herstellung einer derartigen Hinterschneidung kann mittels herkömmlicher Ausreibvorrichtungen durchgeführt werden und ist nicht Gegenstand der vorliegenden Anmeldung.

In das Bohrloch 2 ist die Spreizhülse 5 soweit eingeschoben, bis die vordere Stirnseite der Spreizhülse am Bohrlochgrund 3 aufsitzt. Die durch Schlitze 6 sich ergebenden Spreizsegmente 7 sind zum Einführen der Spreizhülse soweit nach innen gebogen, daß der auf der Außenfläche der Spreizsegmente 7 angeordnete umlaufende Wulst 8 einen dem Bohrlochdurchmesser in der Fassadenplatte 1 entsprechenden Durchmesser aufweist. Damit ist die Spreizhülse 5 vollständig in das Bohrloch 2 der Fassadenplatte 1 einschiebbar.

Nach dem Anlegen des zu befestigenden Gegenstandes 9, beispielsweise ein Haken, Befestigungswinkel oder dgl., an die Rückseite der Fassadenplatte 1 wird durch die mit der Innenbohrung 10 der Spreizhülse 5 fluchtende Bohrung 11 des Gegenstandes 9 ein Blindniet 12 soweit eingesteckt, bis der Nietkopf 13 an der Außenfläche des zu befestigenden Gegenstandes 9 anliegt. Die Länge der Blindniet 12 ist so bemessen, daß das setzkopfseitige Ende 14 der Blindniet 12 die Spreizhülse 5 vollständig durchdringt. Im ungeschlitzten Teil der Spreizhülse 5 verläuft die Innenbohrung 10 zylindrisch. Danach schließt sich eine kegelstumpfartige Erweiterung 10a an, die aufgrund der Einbiegung der Spreizsegmente 7 sich wieder zum vorderen Ende der Spreizhülse hin auf den Durchmesser des zylindrischen Abschnittes der Innenbohrung 10 verjüngt. Ferner ist die Innenbohrung am vorderen Ende der Spreizhülse 5 mit einer Senkung 15 versehen.

In Figur 2 ist die formschlüssige Verankerung der Spreizhülse 5 durch Aufweitung der Spreizsegmente 7 und den Eingriff des Wulstes 8 in die Hinterschneidung 4 des Bohrloches 2 dargestellt. Die Aufweitung der Spreizsegmente 7 erfolgt durch Einziehen des am Nietdorn 16 angeordneten Setzkopfes 17 in den Blindniet 12. Zum Einziehen und Vernieten wird eine Nietzange (nicht dargestellt) verwendet, mit der nach dem Einziehen des Setzkopfes 17 und der Vernietung der Nietdorn 16 innerhalb der Blindniet 12 abgerissen wird. Durch die Ausbildung des Setzkopfes 17 in der Erweiterung 10a der Innenbohrung 10 der Spreizhülse 5 werden die Spreizsegmente 7 soweit aufgebogen und abgestützt, daß der Wulst 8 formschlüssig in die Hinterschneidung 4 des Bohrloches 2 eingreift. Gleichzeitig wird mit dem Nietkopf 13 die Verspannung des zu befestigenden Gegenstandes 9 an der Rückseite der Fassadenplatte 1 erreicht. Durch das sägezahnförmige bzw. trapezförmige Profil des Wulstes 8 mit einer zum hinteren Ende der Spreizhülse geneigten Schrägfläche 18 ergibt sich eine Verspannung zwischen dem Gegenstand 9 und der Fassadenplatte 1.

Bei der in Figur 3 dargestellten Spreizhülse 5a weisen die durch Schlitze 6 gebildeten Spreizsegmente 7 einen reduzierten Außendurchmesser auf. Nach der Herstellung der Innenbohrung 10 mit der Erweiterung 10a werden die Spreizsegmente 7 soweit eingebogen, daß der Außendurchmesser des umlaufenden Wulstes 8 etwa dem Durchmesser des hinteren Abschnittes 19 der Spreizhülse 5a entspricht.

## Patentansprüche

1. Befestigungselement aus Metall, insbesondere zur Befestigung von Fassadenplatten, mit einer in einer Hinterschneidung eines Bohrloches aufspreizbaren, geschlitzten Spreizhülse mit Spreizsegmente auf deren Außenfläche im Bereich ihrer vorderen Stirnseite ein umlaufender Wulst (8) angeordnet ist, und einem die Aufspreizung bewirkenden, einen Kopf zur Verspannung eines Gegenstandes an die Fassadenplatte aufweisenden Spreizelementes, **dadurch gekennzeichnet,** daß die Spreizhülse (5, 5a) nach innen gebogene Spreizsegmente (7) aufweist, und daß das Spreizelement ein Blindniet (12) ist, dessen Setzkopf (17) mit dem Nietdorn (16) in den geschlitzten Teil der Innenbohrung (10) der Spreizhülse (5, 5a) eingezogen und vernietet wird.

2. Befestigungselement nach Anspruch 1, **dadurch gekennzeichnet,** daß die Innenbohrung (10) der Spreizhülse (5, 5a) im ungeschlitzten Teil einen zylindrischen Abschnitt und daran anschließend eine kegelstumpfartige Erweiterung (10a) aufweist, die sich wieder zum vorderen Ende der Spreizhülse hin auf den Durchmesser des zylindrischen Abschnittes verjüngt.

3. Befestigungselement nach Anspruch 1, **dadurch gekennzeichnet,** daß die Innenbohrung (10) am vorderen Ende der Spreizhülse (5, 5a) mit einer Senkung (15) versehen ist.

4. Befestigungselement nach Anspruch 1, **dadurch gekennzeichnet,** daß der Wulst (8) ein sägezahnförmiges oder trapezförmiges Profil mit zum hinteren Ende der Spreizhülse (5, 5a) geneigten Schrägfläche (18) aufweist.

## Claims

1. A fixing element of metal, in particular for fixing facing panels, with a slotted expansible sleeve which has expansible segments, on the outer surface of which in the region of their leading end face there is arranged a circumferential enlargement (8), and which sleeve is arranged to be expanded into an undercut of a drilled hole, and an expander element effecting the expansion and having a head for clamping an article to the facing panel, characterized in that the expansible sleeve (5, 5a) has inwardly bent expansible segments (7), and the expander element is a blind rivet (12), the clench head (17) of which is drawn with the rivet shank (16) into the slotted part of the inner bore (10) of the expansible sleeve (5, 5a) and riveted.

2. A fixing element according to Claim 1, characterized in that in its unslotted part the inner bore (10) of the expansible sleeve (5, 5a) has a cylindrical portion and adjoining that a widened region (10a) in the form of a truncated cone which tapers again towards the leading end of the expansible sleeve to the diameter of the cylindrical portion.

3. A fixing element according to Claim 1, characterized in that at the leading end of the expansible sleeve (5, 5a) the inner bore (10) is provided with a recess (15).

4. A fixing element according to Claim 1, characterized in that the enlargement (8) has a saw-toothed profile or trapezoidal profile with a sloping face (18) inclined towards the rear end of the expansible sleeve (5, 5a).

## Revendications

1. Elément de fixation en métal, en particulier pour la fixation de panneaux de façade, comprenant une douille expansible fendue, pouvant être déployée dans la contre-dépouille d'un perçage et munie de segments déployables sur la surface externe desquels un bourrelet périphérique (8) se trouve dans la région de leur face extrême antérieure ; et un élément d'écartement qui provoque le déploiement, et présente une tête en vue du blocage d'un objet sur le panneau de façade, caractérisé par le fait que la douille expansible (5, 5a) comporte des segments déployables (7) recourbés vers l'intérieur ; et par le fait que l'élément d'écartement est un rivet borgne (12) dont la tête d'engagement (17) est enfoncée, avec la tige (16) du rivet, dans la partie fendue du canal intérieur (10) de la douille expansible (5, 5a), puis rivetée.

2. Elément de fixation selon la revendication 1, caractérisé par le fait que le canal intérieur (10) de la douille expansible (5, 5a) comporte un tronçon cylindrique dans la partie non fendue et, dans la continuité de ce dernier, un élargissement tronconique (10a) se rétrécissant de nouveau, vers l'extrémité antérieure de la douille expansible, jusqu'à la valeur du diamètre du tronçon cylindrique.

3. Elément de fixation selon la revendication 1, caractérisé par le fait que le canal intérieur (10) est pourvu d'un chambrage (15) à l'extrémité antérieure de la douille expansible (5, 5a).

4. Elément de fixation selon la revendication 1, caractérisé par le fait que le bourrelet (8) présente un profil trapézoïdal ou en dents de scie, muni d'une surface oblique (18) inclinée vers l'extrémité postérieure de la douille expansible (5, 5a).
